(19) **Europäisches Patentamt**

**European Patent Office**

**Office européen des brevets**

(11) **EP 1 002 582 B1**

(12) **EUROPÄISCHE PATENTSCHRIFT**

(45) Veröffentlichungstag und Bekanntmachung des Hinweises auf die Patenterteilung:
**29.10.2003  Patentblatt 2003/44**

(51) Int Cl.$^7$: **B01J 49/00**, A47L 15/42

(21) Anmeldenummer: **99121100.4**

(22) Anmeldetag: **22.10.1999**

(54) **Verfahren zum Betrieb eines Ionentauschers**

Method of operating a ion exchanger

Méthode de fonctionnement d'un échangeur d'ions

(84) Benannte Vertragsstaaten:
**BE CH DE FR IT LI SE**

(30) Priorität: **02.11.1998  CH 220698**

(43) Veröffentlichungstag der Anmeldung:
**24.05.2000  Patentblatt 2000/21**

(73) Patentinhaber: **V-Zug AG**
**CH-6301 Zug (CH)**

(72) Erfinder:
 • **Gau, Ingo**
  **6317 Oberwil (CH)**

 • **Zuber, Fritz**
  **6314 Unterägeri (CH)**

(74) Vertreter: **Blum, Rudolf Emil Ernst et al**
**c/o E. Blum & Co**
**Patentanwälte**
**Vorderberg 11**
**8044 Zürich (CH)**

(56) Entgegenhaltungen:
**EP-A- 0 308 523      DE-A- 2 929 363**
**FR-A- 2 732 334      US-A- 3 618 769**
**US-A- 3 652 910      US-A- 3 768 649**
**US-A- 5 234 601**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Betrieb eines Ionentauschers gemäss Oberbegriff von Anspruch 1.

Ionentauscher werden z.B. in Haushaltsgeräten eingesetzt und dienen insbesondere dazu, den Kalkgehalt des Wassers zu reduzieren.

Da sich das Ionentauscherharz im Betrieb erschöpft, muss es in geeignet gewählten Zeitintervallen regeneriert werden.

Bis anhin wurde die Regenerierung abhängig von der durchgeflossenen Wassermenge eingeleitet. Hierzu musste die Wasserhärte angegeben werden. Dies hat jedoch den Nachteil, dass bei einer falschen Angabe der Wasserhärte oder bei wechselnder Wasserqualität keine optimale Regenerierung erfolgen kann.

In US 5 234 601 wird ein Verfahren offenbart, bei welchem der Quotient zweier Leitfähigkeiten im Ionentauscher überwacht und mit einem Grenzwert verglichen wird. Dadurch wird der Einfluss von Temperaturschwankungen reduziert. Es zeigt sich jedoch, dass auch dieses Vorgehen die Kapazität des Ionentauschers nicht optimal ausnützt.

Es stellt sich deshalb die Aufgabe, ein Verfahren der eingangs genannten Art bereitzustellen, welches eine möglichst effiziente Wahl des Zeitpunkts der Regenerierung des Ionentauschers erlaubt, wobei jedoch der apparative Aufwand bei guter Ausnutzung der Kapazität des Ionentauschers gering bleiben soll.

Diese Aufgabe wird vom Verfahren gemäss Anspruch 1 gelöst.

Das Verfahren nutzt den Umstand, dass sich der Widerstand des Harzes im Ionentauscher je nach Beladung ändert. Die mit Kalzium bzw. Magnesium beladene Form des Harzes hat einen höheren Widerstand als die mit Natrium beladene Form.

Ein Problem bei der Widerstandsmessung liegt jedoch darin, dass die gemessenen Werte stark von der Wasserqualität und der Temperatur abhängen. Um dies zu kompensieren, wird deshalb erfindungsgemäss der Quotient zweier Widerstandsgrössen in unterschiedlichen Bereichen des Ionentauschers ermittelt. Dieser Quotient ist, zumindest in erster Näherung, unabhängig von Temperatur und Wasserqualität und spiegelt direkt die unterschiedliche Harzbeladung in den beiden Bereichen des Ionentauschers wieder.

Aus dem Verlauf des Quotienten kann ermittelt werden, wann der Ionentauscher regeneriert werden muss. Hierzu wird nach der Regenerierung ein von der Änderungsgeschwindigkeit des Quotienten abhängiger Schwellwert ermittelt, der später mit dem Quotienten verglichen wird. So kann z.B. nach der Regenerierung bestimmt werden, welchen Wert der Quotient nach Durchfluss einer vorgegebenen Wassermenge erreicht. Mit dieser Massnahme wird berücksichtigt, dass die Restkapazität des Ionentauschers nach Unterschreiten des Schwellwerts von der jeweiligen Wasserhärte abhängt.

Bei den erwähnten Widerstandsgrössen kann es sich um irgendwelche Werte handeln, die proportional zum jeweiligen Widerstand sind, z.B. um den Widerstand selbst, einen Spannungsabfall bei vorgegebenen Strom, etc.

Es ist auch denkbar, den Logarithmus der Widerstandsgrössen zu messen. Dies hat den Vorteil, dass der Messbereich erweitert wird. Bei einer Messung des Logarithmus der Widerstandsgrössen kann der Quotient auch aus der Differenz der Logarithmen ermittelt werden.

Die gemessenen Bereiche sind möglichst so zu wählen, dass sie während des Betriebs des Ionentauschers zu unterschiedlichen Zeiten mit Kalzium und Magnesium beladen werden.

Vorzugsweise befindet sich der eine Messbereich in der Nähe des Abflusses des Ionentauschers. Dies erlaubt es zu ermitteln, wann die letzten Teile des Harzes mit Kalzium bzw. Magnesium beladen werden.

Der zweite Messbereich erstreckt sich vorzugsweise vom Zufluss- zum Abflussbereich über möglichst die ganze Länge des Ionentauschers. Er umfasst in diesem Fall Bereiche des Harzes, welche zu unterschiedlichen Zeiten mit Kalzium bzw. Magnesium beladen werden und ändert deshalb seinen Widerstand beim Betrieb des Ionentauschers kontinuierlich. Dies erlaubt eine verlässlichere Extrapolation des Verlaufs des Quotienten.

Das erfindungsgemässe Verfahren eignet sich insbesondere zum Betrieb eines Ionentauschers in einem Haushaltsgerät, z.B. einem Geschirrspüler.

Insbesondere bei der Anwendung in Haushaltsgeräten ist es nützlich, ein Mass für die Wasserhärte des Frischwassers zu besitzen, so dass z.B. ein Spülvorgang bei optimaler Wasserhärte durchgeführt werden kann. Ein solches Mass für die Wasserhärte kann aus dem Verlauf des Quotienten ermittelt werden. Je schneller sich der Quotient ändert, desto grösser ist die Wasserhärte.

Weitere bevorzugte Merkmale und Anwendungen ergeben sich aus den abhängigen Ansprüchen sowie aus der nun folgenden Beschreibung anhand der Figuren. Dabei zeigen:

Fig. 1 eine schematische Darstellung einer Ionentauscheranlage und
Fig. 2 den Verlauf des Quotienten Q in Abhängigkeit der Wassermenge.

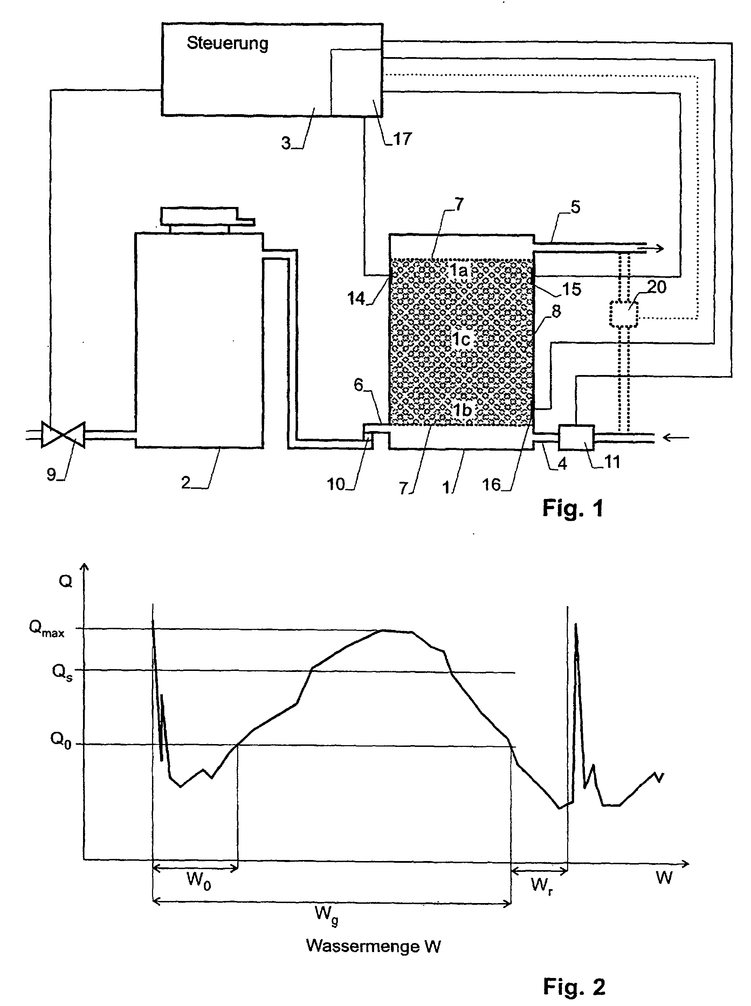

Figur 1 zeigt eine Ionentauscheranlage, wie sie z. B. in einem Geschirrspüler zu finden ist. Ihre wichtigsten Teile sind der eigentliche Ionentauscher 1, ein Gefäss 2 für Regeneriersalz und eine Steuerung 3.

Der Ionentauscher 1 besitzt einen Eingang 4 für Frischwasser, einen Ausgang 5 für das behandelte Wasser und einen Eingang 6 für die Salzsole vom Re-

genieralz-Gefäss 2. Zwischen dem Eingang 4 und dem Ausgang 5 ist, abgetrennt durch zwei Filtermembranen 7, das Ionentauscherharz 8 angeordnet.

Das Regeneriersalz-Gefäss 2 enthält ein konventionelles Regeneriersalz. Durch Öffnen eines Ventils 9 kann Salzsole aus dem Regeneriersalz-Gefäss 2 über ein Rückschlagventil 10 in den Ionentauscher gepumpt werden.

Die Steuerung 3 kontrolliert das Ventil 9. Ausserdem kontrolliert und misst sie den Zufluss von Frischwasser in den Ionentauscher 1 über ein Messventil 11.

Im Ionentauscher 1 sind drei Elektroden 14, 15 und 16 angeordnet. Zwei obere Elektroden 14, 15 befinden sich etwa auf gleicher Höhe in einem Ausgangsbereich 1a des Ionentauschers, eine dritte Elektrode 16 ist in einem Eingangsbereich 1b angeordnet.

Eine Messschaltung 17 der Steuerung misst die elektrischen Widerstände zwischen diesen Elektroden. Ein erster Widerstand $R_0$ wird zwischen den beiden oberen Elektroden 14 und 15 ermittelt, ein zweiter Widerstand $R_q$ zwischen den Elektroden 14 und 16. Der erste Widerstand ist also ein Mass für den spezifischen elektrischen Widerstand im Ausgangsbereich 1a des Ionentauschers. Der zweite Widerstand $R_q$ entspricht einer Mittelung des spezifischen elektrischen Widerstands über einen sich zwischen Eingangs- und Ausgangsbereich erstreckenden Zwischenbereich 1c.

Im Betrieb der Anlage wird der Ionentauscher 1 in gewissen Abständen durch Einleiten von Sole aus dem Regeneriersalz-Gefäss regeneriert. Dadurch wird das Ionentauscherharz 8 mit Natriumionen gesättigt. Danach wird zu behandelndes Frischwasser durch den Ionentauscher 1 geleitet, wodurch zuerst im Eingangsbereich 1b, dann im Zwischenbereich 1c und schliesslich im Ausgangsbereich 1a die Natriumionen durch Kalzium- und Magnesiumionen ersetzt werden, wodurch sich der spezifische Widerstand der Bereiche entsprechend erhöht.

In der Steuerung 3 wird dauernd der Quotient

$$Q = Rq / R_0 \qquad (1)$$

berechnet. Der Verlauf dieses Werts in Abhängigkeit der durch den Ionentauscher 1 geführten Frischwassermenge W ist in Fig. 2 dargestellt.

Die Kurve in Fig. 2 beginnt nach einer Regenerierung des Ionentauschers. Zu Beginn kann der Quotient Q sehr hohe und schwankende Werte besitzen, bis die Sole aus dem Ionentauscher gespült ist. Danach erreicht Q einen Tiefstwert und beginnt kontinuierlich anzusteigen. Dies ist darauf zurückzuführen, dass zu Beginn der spezifische Widerstand in allen Bereichen 1a, 1b und 1c des Ionentauschers etwa gleich ist und mit zunehmender Wassermenge zuerst im Eingangsbereich 1b und dann im Zwischenbereich 1c ansteigt, was den Widerstandswert $R_q$ erhöht aber keinen

Einfluss auf $R_0$ hat. Der Quotient Q erreicht ein Maximum $Q_{max}$ bevor auch der Wert $R_0$ anzusteigen beginnt. Danach fällt der Quotient Q wieder und erreicht ein Minimum, wenn der ganze Ionentauscher 1 erschöpft ist.

Die Geschwindigkeit, mit der sich der Quotient Q abhängig von der durchfliessenden Wassermenge W ändert, ist ein Mass für die Härte des Wassers. Je härter das Wasser ist, desto schneller ändert sich der Quotient Q.

Um den geeigneten Zeitpunkt einer nächsten Regenerierung zu bestimmen, misst die Steuerung 3 den Wert $Q_0$ (Schwellwert) des Quotienten Q nach Durchfluss einer vorgegebenen Frischwassermenge $W_0$. Wenn sodann in der Endphase eines Zyklus der Quotient Q nach Durchfluss einer Frischwassermenge $W_g$ wieder unter den Schwellwert $Q_0$ absinkt, so weiss die Steuerung 3, dass bald eine Regenerierung eingeleitet werden muss. Zuerst lässt die Steuerung 3 jedoch noch eine Restwassermenge $W_r$ durch den Ionentauscher 1 fliessen, um die Restkapazität des Ionentauschers auszunutzen. Die Restwassermenge $W_r$ wird berechnet aus der Menge $W_g$ von Wasser, die bis zum Erreichen des Schwellwerts $Q_0$ durch den Ionentauscher geflossen ist und aus einem festen Korrekturwert $W_k$ gemäss

$$W_r = m \times W_g - W_k. \qquad (2)$$

Dabei ist m ein numerischer Faktor von z.B. 0.3. Der Faktor m und der Korrekturwert $W_k$ hängen von der Geometrie und Grösse des Ionentauschers ab.

Die Formel (2) berücksichtigt, dass die Restkapazität (und auch der Wert von $W_g$) mit zunehmender Wasserhärte sinkt.

Sobald auch die Restwassermenge $W_r$ den Ionentauscher 1 durchlaufen hat, wird eine Regenerierung eingeleitet. Danach beginnt ein nächster Zyklus, in welchem die obigen Parameter $Q_0$ und $W_g$ erneut gemessen werden, so dass einer allfälligen Änderung der Wasserhärte Rechnung getragen werden kann.

Um zu vermeiden, dass kurzzeitige Schwankungen des Quotienten Q in der Anfangsphase eines Zyklus eine Regenerierung auslösen, misst die Steuerung 3 dauernd den in einem Zyklus erreichten Maximalwert $Q_{max}$ des Quotienten Q. Eine Regenerierung wird nur dann ausgelöst, wenn der Quotient Q zuvor mindestens einmal einen oberen Schwellwert $Q_s$ überstiegen hat.

Die Härte des Wassers kann z.B. aus dem Wert von $W_g$ berechnet werden. Dies kann ausgenutzt werden, um die Wasserhärte des aufbereiteten Wassers auf einen bestimmten Wert einzustellen. Insbesondere für Geschirrspüler werden z.B. Prozesswasserhärten von etwa 8°fH bevorzugt, während das den Ionentauscher verlassende Wasser sehr weich ist und eine Härte von etwa 1 - 2°fH besitzt. Um die Wasserhärte entsprechend anzuheben, kann zwischen dem Ein- und Ausgang des Ionentauschers 1 ein Bypassventil 20 vorgesehen sein, über welches das den Ionentauscher verlassende Wasser mit Frischwasser in einem entsprechenden Mengenverhältnis gemischt werden kann, so dass die gewünschte Prozesswasserhärte erreicht wird.

Die Messung der Widerstandswerte $R_0$ und $R_q$ kann mittels konventionellen Schaltungen durchgeführt werden. Vorzugsweise wird jedoch eine Messschaltung mit logarithmischer Empfindlichkeit eingesetzt, so dass kleine Widerstandswerte genauer gemessen werden können also grosse. Dadurch wird der Messbereich ohne Bereichsumschaltung erweitert.

Es ist nicht unbedingt notwendig, die absoluten Widerstände zwischen den Elektroden zu messen. Dank der Quotientenbildung können auch Werte gemessen werden, die zu den Widerständen proportional sind, ohne dass sich an dem hier beschriebenen Verfahren etwas ändert.

Wie eingangs erwähnt, werden durch die Quotientenbildung gemäss Formel (1) die Einflüsse des spezifischen Widerstands des Frischwassers und der Temperatur eliminiert. Auch Alterungseffekte im Harz und an den Elektroden werden weitgehend ausgeschaltet.

Obwohl die meisten Steuervorgänge auf den Quotienten Q abstützen, können einige Erkenntnisse auch aus den Absolutwerten von $R_0$ und $R_q$ gewonnen werden:

- Wenn die Widerstandswerte dauernd sehr tief sind, kann ein Salzleck vermutet werden.
- Wenn unmittelbar nach einer Regenerierung die Widerstandswerte nicht unter eine gewisse Schwelle sinken, kann angenommen werden, dass die Salzkonzentration zu gering und der Behälter 2 leer ist.

Zur Bestimmung des Zeitpunkts der Regenerierung wurde im beschriebenen Beispiel der Schwellwert $Q_0$ und die Restwassermenge $W_r$ verwendet. Es ist jedoch auch denkbar, den Zeitpunkt in anderer Weise aus dem Verlauf des Quotienten Q zu ermitteln, z.B. durch Vergleich mit einem theoretisch oder empirisch bestimmten Sollverlauf, wobei ein Parameter des Sollverlaufs der Zeitpunkt ist, zu welchem der Ionentauscher erschöpft ist. Entsprechende Verfahren zur Kurvenanpassung oder Extrapolation sind dem Fachmann bekannt.

Im vorliegenden Beispiel wurde eine Ionentauscheranlage beschrieben, wie sie insbesondere in einen Geschirrspüler eingesetzt werden kann. Entsprechende Anlagen eignen sich jedoch auch für andere Haushaltsgeräte, z.B. Waschmaschinen. Das erfindungsgemässe Prinzip kann generell überall dort verwendet werden, wo Ionentauscher Einsatz finden.

**Patentansprüche**

1. Verfahren zum Betrieb eines Ionentauschers, wobei zum elektrischen Widerstand proportionale Widerstandsgrössen ($R_0$, $R_q$) in mindestens zwei unterschiedlichen Bereichen des Ionentauschers bestimmt werden, wobei der Quotient (Q) der beiden Widerstandsgrössen ($R_0$, $R_q$) ermittelt wird, wobei aus dem Verlauf des Quotienten (Q) der Zeitpunkt zur Regenerierung des Ionentauschers bestimmt wird, indem der Verlauf des Quotienten (Q) mit einem Schwellwert verglichen wird, **dadurch gekennzeichnet, dass** nach der Regenerierung des Ionentauschers der Schwellwert abhängig von der Änderungsgeschwindigkeit des Quotienten (Q) ermittelt wird.

2. Verfahren nach Anspruch 1, **dadurch gekennzeichnet, dass** die Logarithmen der Widerstandsgrössen gemessen werden, und insbesondere dass der Quotient (Q) aus der Differenz der Logarithmen der Widerstandsgrössen errechnet wird.

3. Verfahren nach einem der vorangehenden Ansprüche, **dadurch gekennzeichnet, dass** der Schwellwert ($Q_0$) aus dem Wert des Quotienten (Q) ermittelt wird, den der Quotient (Q) nach der Regenerierung nach Durchfluss einer vorgegebenen Frischwassermenge ($W_0$) erreicht.

4. Verfahren nach einem der vorangehenden Ansprüche, **dadurch gekennzeichnet, dass**, nachdem der Quotient (Q) wieder den Schwellwert ($Q_0$) erreicht hat, eine Regenerierung eingeleitet wird, nachdem eine Restwassermenge ($W_r$) den Ionentauscher durchflossen hat, und insbesondere dass die Restwassermenge ($W_r$) abgeleitet wird aus der bis zum Erreichen des Schwellwerts ($Q_0$) durch den Ionentauscher geflossenen Frischwassermenge ($W_g$).

5. Verfahren nach einem der vorangehenden Ansprüche, **dadurch gekennzeichnet, dass** der Verlauf des Quotienten (Q) extrapoliert oder mit einen theoretischen oder empirischen Verlauf verglichen wird, zur Bestimmung des Zeitpunkts der Regenerierung.

6. Verwendung des Verfahrens nach einem der vorangehenden Ansprüche zum Betrieb eines Ionentauschers in einem Haushaltsgerät, insbesondere in einem Geschirrspüler.

7. Verwendung nach Anspruch 6, wobei aus dem Verlauf des Quotienten ein Mass für die Frischwasserhärte ermittelt wird, und insbesondere wobei dem den Ionentauscher (1) verlassenden Wasser Frischwasser zugeführt wird, um eine vorgegebene Prozesswasserhärte zu erreichen.

## Claims

1. Method for operating an ion exchanger, wherein resistivity values ($R_0$, $R_q$) proportional to the electrical resistance in at least two different areas of the ion exchanger are determined, wherein the quotient (Q) of the two resistivity values is determined, wherein the time for regeneration of the ion exchanger is determined from the time dependence of the quotient (Q) by comparing the time dependence of the quotient (Q) to a threshold value, **characterised in that**, after the regeneration of the ion exchanger, the threshold value is determined in dependence of the speed of change of the quotient (Q).

2. Method of claim 1, **characterised in that** the logarithms of the resistivity values are measured, and in particular that the quotient (Q) is calculated from the difference of the logarithms of the resistivity values.

3. Method of any of the preceding claims wherein the threshold value ($Q_0$) is determined from the value of the quotient (Q) that the quotient (Q) reaches after the passage of a given quantity ($W_0$) of fresh water after the regeneration.

4. Method of any of the preceding claims **characterised in that**, after the quotient (Q) has reached the threshold value ($Q_0$) again, a regeneration is started once a residual quantity ($W_r$) of water has flowed through the ion exchanger, and in particular that the residual quantity ($W_r$) is derived from the quantity ($W_g$) of fresh water that has flowed through the ion exchanger until reaching the threshold value ($Q_0$).

5. Method of any of the preceding claims, **characterised in that** the time dependence of the quotient (Q) is extrapolated or compared to a theoretical or empirical time dependence for determining the time of the regeneration.

6. Use of the method of any of the preceding claims for operating an ion exchanger in a household appliance, in particular in a dish washer.

7. Use of claim 6, wherein, from the time dependence, a measure for the fresh water hardness is determined, and in particular wherein fresh water is added to the water leaving the ion exchanger (1) in order to obtain a given process water hardness.

## Revendications

1. Méthode pour faire fonctionner un échangeur d'ions, selon laquelle on détermine en au moins deux régions distinctes de l'échangeur des valeurs de résistance ($R_0$, $R_q$) proportionnelles à la résistance électrique, qu'on détermine le quotient (Q) de ces deux valeurs de résistance ($R_0$, $R_q$), et qu'on détermine à partir de la variation dans le temps du quotient (Q) le moment approprié pour une régénération de l'échangeur, par comparaison de ce quotient (Q) avec une valeur-seuil, **caractérisée en ce qu'**on détermine la valeur-seuil en fonction de la vitesse à laquelle le quotient (Q) varie après la régénération de l'échangeur.

2. Méthode selon la revendication 1, **caractérisée en ce qu'**on mesure les logarithmes des valeurs de résistance, et en particulier **en ce que** l'on calcule le quotient (Q) à partir de la différence entre les logarithmes des valeurs de résistance.

3. Méthode selon une des revendications précédentes, **caractérisée en ce qu'**on détermine la valeur-seuil ($Q_0$) à partir de la valeur que prend le quotient (Q) après le passage d'une quantité prédéterminée ($W_0$) d'eau fraîche après la régénération.

4. Méthode selon une des revendications précédentes, **caractérisée en ce qu'**après que le quotient (Q) a de nouveau atteint la valeur-seuil ($Q_0$), on amorce une régénération une fois qu'une quantité ($W_r$) d'eau restante a parcouru l'échangeur, et en particulier **en ce que** l'on détermine la quantité d'eau restante ($W_r$) à partir de la quantité d'eau fraîche ($W_g$) ayant parcouru l'échangeur jusqu'à ce que la valeur-seuil ($Q_0$) soit atteinte.

5. Méthode selon une des revendications précédentes, **caractérisée en ce que** l'on extrapole la valeur dans le temps du quotient (Q), ou qu'on la compare avec une variation théorique ou empirique, afin de déterminer le moment de la régénération.

6. Utilisation de la méthode selon une des revendications précédentes pour faire marcher un échangeur d'ions dans un appareil domestique, et en particulier dans un lave-vaisselle.

7. Utilisation selon la revendication 6, où l'on détermine une mesure pour la dureté de l'eau fraîche à partir de la variation dans le temps du quotient (Q), et en particulier où l'on ajoute à l'eau sortant de l'échangeur d'ions (1) de l'eau fraîche afin d'obtenir une dureté prédéterminée pour la marche de l'appareil domestique.

**Fig. 1**

Wassermenge W

**Fig. 2**